# EUROPÄISCHE PATENTSCHRIFT

(11) **EP 1 515 237 B1**
(45) Veröffentlichungstag und Bekanntmachung des Hinweises auf die Patenterteilung: **21.02.2007**
(21) Anmeldenummer: 04103833.2
(22) Anmeldetag: 09.08.2004
(51) Int. Cl.: G06F 13/376, G06F 13/24, H04L 12/413

(54) **Schnittstelle für ein UART-basiertes Bussystem**
Interface for a UART-based bus system
Interface pour un système basé sur UART

(30) Priorität: 04.09.2003 DE 10340806; 11.12.2003 DE 10358039
(43) Veröffentlichungstag der Anmeldung: 16.03.2005
(73) Patentinhaber: SIEMENS AKTIENGESELLSCHAFT, 80333 München (DE)
(72) Erfinder: Kursawe, Christian, 94315 Straubing (DE); Müller, Axel, 93055 Regensburg (DE)

(56) Entgegenhaltungen:
- EP-A- 0 246 666
- EP-A- 0 952 706
- DE-A- 10 045 947
- US-A- 4 063 220
- US-A- 4 259 663
- US-A- 5 636 343

## Beschreibung

Die Erfindung betrifft eine Schnittstellenschaltung zur Ankopplung eines über ein UART-basiertes Bussystem anzusprechenden Busteilnehmers an einen Eindrahtbus des Bussystems sowie ein Bussystem mit einer solchen Schnittstellenschaltung. Die Erfindung betrifft ferner ein Verfahren zum Betreiben dieser Schnittstellenschaltung.

Solche Bussysteme und Schnittstellen sind in einer Vielzahl von Ausführungsformen allgemein bekannt. Für den Mikrorechnereinsatz in sensornahen Bereichen existieren sogenannte Feldbussysteme, die mit geringem Aufwand Sensoren, Aktoren und Geräte seriell verbinden. Aufgrund der Vielfalt von Anwendungsgebieten hat sich ein breites Spektrum von Feldbussystemen entwickelt. Die bekanntesten und auch gängigsten Feldbussysteme sind der Profibus, der CAN-Bus (CAN = Controller Area Network) und der Interbus-S. Diese Bussysteme unterscheiden sich in charakteristischen Eigenschaften wie Leitungslänge, Übertragungsgeschwindigkeit, Zugriffsverfahren und dergleichen.

Neben diesen Feldbussystemen kommt zunehmend auch das sogenannte UART-Bussystem (UART = Universal Asynchronous Receiver Transmitter) zum Einsatz. Das UART-Bussytem ist ein Feldbussystem, das speziell zur kostengünstigen Vernetzung von Mikrocontrollern in verteilten Anwendungen mit geringen Bandbreitenanforderungen entwickelt wurde. Der UART-Bus ermöglicht eine Byte asynchrone, bitserielle Datenübertragung zwischen verschiedenen, an dem UART-Bus angekoppelten Schnittstellen. Die Ankopplung erfolgt vollkommen symmetrisch, so dass kein dezidierter Masterknoten erforderlich ist und somit der Ausfall einzelner Knoten des UART-Bussystems die Kommunikation zwischen den übrigen Knoten nicht dauerhaft beeinträchtigt. Als Busschnittstelle wird eine in praktisch allen Mikrocontrollern ohnehin integrierte UART-Schnittstelle eingesetzt, die über einen einfachen, zum Beispiel diskret aufgebauten Transceiver die physikalische Ankopplung an den Eindrahtbus ermöglicht.

Ein solches UART-basiertes Bussystem ist beispielsweise in der DE 100 45 947 A1 sowie der DE 101 34 584 A1 beschrieben.

UART-Schnittstellen werden insbesondere in Multimasterbussystemen eingesetzt. Ein UART-Bussystem weist typischerweise eine Eindrahtbusleitung auf, an der mehrere Busteilnehmer, die sogenannten Knoten, angekoppelt sind. Über die Eindrahtbusleitung können zwei oder mehrere Busteilnehmer miteinander kommunizieren. Dabei fungiert einer dieser Teilnehmer als Masterknoten und die übrigen Teilnehmer als Slave. Im Falle einer sogenannten Punkt-zu-Punkt-Datenkommunikation zwischen mindestens zwei Busteilnehmern fungiert jeweils ein Busteilnehmer als Sender und sendet Daten über die Eindrahtbusleitung, wobei die anderen Busteilnehmer als Empfänger fungieren. Bei einer Datenkommunikation werden dabei ein Sendekanal und ein Empfangskanal einer jeweiligen UART-Schnittstelle typischerweise zu einem Paar zusammengeschaltet. Dadurch ist eine Diagnose eines Kurzschlusses auf der Eindrahtbusschnittstelle gegen die Versorgungsspannung bzw. gegen ein Bezugspotenzial möglich. Dies geschieht über einen Vergleich der gesendeten Bits mit den Bits, die über einen Rückkopplungszweig der jeweiligen Schnittstelle empfangen wird. Auf diese Weise kann auch eine Zugriffskollision detektiert werden, wenn zum Beispiel zwei oder mehr Busteilnehmer gleichzeitig über die Eindrahtbusleitung senden.

Die Busteilnehmer heutiger UART-basierter Multimasterbussysteme weisen jeweils einen Mikrocontroller auf, der typischerweise zwei UART-Schnittstellen enthält. Es kann nun vorkommen, dass eben diese beiden UART-Schnittstellen eines Busteilnehmers bereits belegt sind und somit nicht mehr für eine weitere Datenkommunikation zur Verfügung stehen. Die Anzahl der UART-Schnittstellen korrespondiert also nicht mehr mit der Anzahl der angeforderten UART-Schnittstellen. In diesem Falle kann aber die UART-Funktionalität durch eine sogenannte "Input Capture Function" (RxD) und eine "Output Compare Function" (TxD) emuliert werden. Für die Verifikation der Eindrahtbusleitung bezüglich eines Kurzschlusses oder einer Zugriffskollision ist hier allerdings eine außerordentlich komplexe, aufwändige Software erforderlich. Diese hat aber zur Folge, dass die Datenübertragungsrate signifikant sinkt.

Die Ursache für den erforderlichen hohen Softwareaufwand besteht darin, dass für die Verifikation der Busschnittstelle das rückgekoppelte Echo des gesendeten Signals mit dem gesendeten Signal verglichen werden muss. Zu diesem Zweck müssen der Eingang (Input Capture, RxD) und der Ausgang (Output Compare, TxD) parallel zueinander betrieben werden. Dies verdoppelt die Interupt-Belastung und damit die Belastung der zentralen Recheneinheit (CPU), wodurch die effektive CPU-Leistung und damit die Datenübertragungsrate reduziert wird.

Für einige sehr zeit- und sicherheitskritischen Anwendungen, wie zum Beispiel die so genannte Keyless-Entry-Funktionalität in einem Kraftfahrzeug, bei der der Zugang in ein Kraftfahrzeug schlüssellos unter Verwendung einer Transpondertechnologie erfolgt, sind geringere Datenübertragungsraten im Bereich von 1 - 2,5 kBaud allerdings nicht wünschenswert. Im Falle der schlüssellosen Zugriffsanfrage werden hier aus sicherheitstechnischen Gründen umfassende kodierte Daten zwischen Transponder und Steuergerät ausgetauscht. Bei den genannten relativ niedrigen Datenübertragungsraten dauerte diese Datenkommunikation zwischen Schlüssel- und Steuergerät außerordentlich lang, wodurch sich eine direkte Rückwirkung auf den Benutzer ergibt. Konkret bedeutet das, dass der Öffnungsvorgang auf eine schlüssellose Zugangsanfrage hin im Bereich von einigen Sekunden dauert, in der aber der Benutzer das Kraftfahrzeug nicht öffnen kann. Es besteht daher der Bedarf, eine komfortablere Funktionalität für den Benutzer insbesondere für den Fall bereitzustellen, dass eine Datenkommunikation nicht über zwei UART-Schnittstellen durchgeführt wird.

Die US 5,636,343 beschreibt ein Bussystem mit einem Eindrahtbus, bei dem ein Busteilnehmer über einen Eingangs-/Ausgangsanschluss an den Eindrahtbus angeschlossen ist. Der Bus ist hier als LAN-Bus und insbesondere als I²C-Bus ausgebildet. Zur Ankopplung des Busteilnehmers an den Bus weist ein Busteilnehmer jeweils einen Mikro-Controller mit einem Eingangs- und Ausgangsanschluss auf, über den der Busteilnehmer an den Eindrahtbus angeschlossen ist. Ferner weist ein Busteilnehmer als Bestandteil des Mikro-Controllers eine als XOR-Gatter ausgebildete Vergleichereinrichtung auf, die dazu ausgelegt ist, einen Zugriffskonflikt auf den Eindrahtbus zu detektieren und in diesem Falle einen Interrupt auszulösen.

Die US 4,063,220 beschreibt ein Bussystem mit mehreren Busteilnehmern, die über eine Schnittstellenschaltung, enthaltend einen Eingangs- und einen Ausgangstreiber und eine ent sprechende Logikschaltung, an den Bus angekoppelt sind. Der Bus ist hier als Mehrdrahtbus ausgebildet.

Der vorliegenden Erfindung liegt daher die Aufgabe zugrunde, eine verbesserte Datenübertragung zwischen einer UART-Busschnittstelle und einer herkömmlichen Busschnittstelle zu ermöglichen.

Erfindungsgemäß wird diese Aufgabe durch eine Schaltungsanordnung mit den Merkmalen des Patentanspruchs 1, ein Bussystem mit den Merkmalen des Patentanspruchs 14 sowie zwei Verfahren mit den Merkmalen der Patentansprüche 19 und 23 gelöst.

Die der vorliegenden Erfindung zugrunde liegende Idee besteht darin, eine sehr komplexe aufwändige Software für die Diagnose eines Kurzschlusses bzw. die Feststellung einer Zugriffskollision auf einer Eindrahtbusleitung zumindest teilweise durch die Funktionalität einer einfachen Hardware-Schaltung zu ersetzen. Die Software des jeweiligen Busteilnehmers kann dadurch signifikant vereinfacht werden, wodurch die Recheneinheit des Busteilnehmers auf diese Weise signifikant entlastet wird. Aufgrund der geringeren CPU-Rechenleistung lassen sich damit höhere Datenübertragungsraten und damit eine höhere Geschwindigkeit der Datenkommunikation realisieren.

Die der vorliegenden Erfindung zugrunde liegende Erkenntnis besteht darin, dass in der einfachsten Implementierung hierfür lediglich eine einfache Vergleichereinrichtung, beispielsweise ein einfaches XOR-Gatter, bereitgestellt werden muss, welches die jeweiligen Bits des Sendepfades und die entsprechenden Bits im Echo des Empfangspfades vergleicht. Stimmen diese Bits miteinander überein, dann kann auf eine ordnungsgemäße Datenübertragung geschlossen werden. Stimmen die Bits nicht überein, dann kann einerseits ein Kurzschluss in der Eindrahtbusleitung vorliegen oder ein anderer Busteilnehmer, der beispielsweise dominant und damit zugriffsberechtigt ist, greift mehr oder weniger gleichzeitig auf die Eindrahtbusleitung zu. Zwar kann zwischen den beiden Fällen, nämlich Kurzschluss oder Zugriffskollision, nicht unterschieden werden, jedoch ist das auch nicht erforderlich, da lediglich verhindert werden muss, dass der Busteilnehmer auf die Eindrahtbusleitung schreibt, während die Busleitung defekt ist oder bereits ein anderer Busteilnehmer auf den Bus zugreift. In diesen Fällen kann somit vorteilhafterweise vermieden werden, dass Daten gesendet werden und es somit zu einem Datenverlust im Kommunikationssystem kommt.

Neben der Bereitstellung der Vergleichereinrichtung müssen ferner die Protokolle der jeweils über die Eindrahtbusschnittstelle kommunizierenden Busteilnehmer miteinander abgestimmt sein, so dass eine Emulation der gesendeten und empfangenen Daten und damit eine Diagnose der Eindrahtbusleitung möglich ist.

In einer sehr vorteilhaften Ausgestaltung der Erfindung ist eine Diagnoseeinrichtung zur Diagnose des Zustandes der Eindrahtbusleitung sowie der mit dem Busteilnehmer über die Eindrahtbusleitung kommunizierenden weiteren Busteilnehmer vorgesehen. Diese Diagnosemöglichkeit innerhalb eines Busteilnehmers bzw. innerhalb einer entsprechenden Eindrahtbusschnittstelle war bei herkömmlichen Systemen bislang nicht vorhanden. Zur Diagnose war bislang ein relativ hoher Aufwand erforderlich, beispielsweise indem das Bussystem bzw. die jeweiligen Busteilnehmer eigens in einer Werkstatt diagnostiziert wurden. Dieser Aufwand kann vorteilhafterweise durch die erfindungsgemäße, sehr elegante und auch schaltungstechnisch einfache Erweiterung eines Busteilnehmers durch eine Diagnosevorrichtung beseitigt werden.

Vorteilhafte Ausgestaltungen und Weiterbildungen der Erfindung sind Gegenstand der weiteren Unteransprüche sowie der Beschreibung unter Bezugnahme auf die Zeichnung.

Die Erfindung wird nachfolgend anhand der in den schematischen Figuren der Zeichnung angegebenen Ausführungsbeispiele näher erläutert. Es zeigt dabei:
- Figur 1: ein verallgemeinertes Blockschalbild für ein UART-Bussystem;
- Figur 2: ein erstes Beispiel eines Teils des UART-Bussystems aus Figur 1, bei dem ein Busteilnehmer eine UART-Schnittstelle und der andere Busteilnehmer keine UART-Schnittstelle aufweist;
- Figur 3: das Datenrahmenformat für eine Datenkommunikation;
- Figur 4: das Adressformat des erfindungsgemäßen Protokolls;
- Figur 5: schematische Darstellungen für den Vergleich der Adressbits unterschiedlicher Busteilnehmer zur Veranschaulichung des erfindungsgemäßen Verfahrens für eine Zugriffskollision über die Eindrahtbusleitung;
- Figur 6: ein zweites Beispiel eines Teils des UART-Bussystems aus Figur 1, welches mit einer Diagnoseeinrichting ausgestattet ist;
- Figur 7: ein Blockschaltbild, anhand dem das erfindungsgemäße Diagnoseverfahren einer Diagnoseeinrichtung entsprechend Figur 6 näher erläutert wird.

In allen Figuren der Zeichnung sind gleiche bzw. funktionsgleiche Elemente, Merkmale und Signale - sofern nichts anderes angegeben ist - mit denselben Bezugszeichen versehen worden.

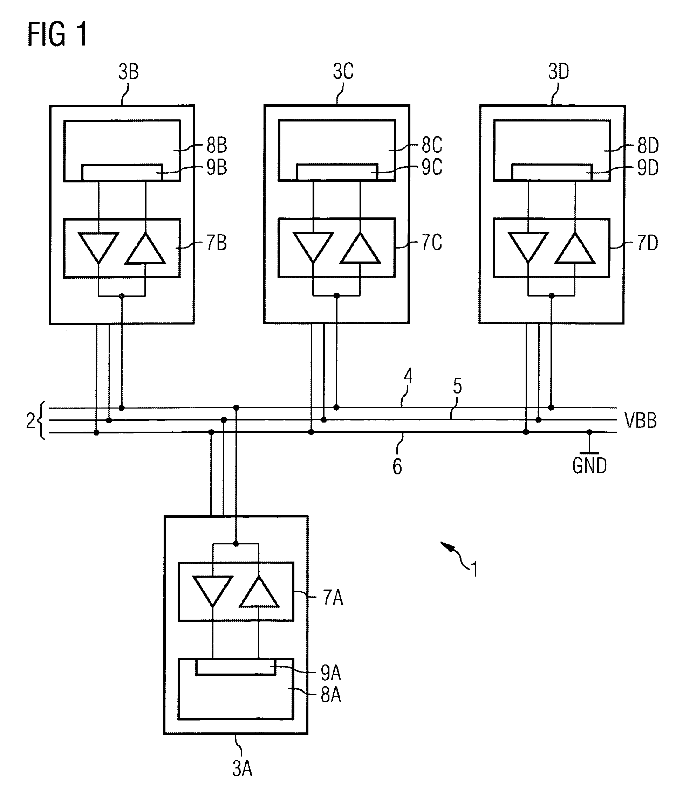

Figur 1 zeigt anhand einer schematischen Blockdarstellung ein UART-Bussystem. Das mit Bezugszeichen 1 bezeichnete UART-Bussystem besteht aus einem Bus 2 sowie mehreren an diesem Bus 2 angekoppelten Busteilnehmern 3A - 3D. Der Bus 2 weist eine Eindrahtbusleitung 4 auf, die der Datenkommunikation der Busteilnehmer 3A - 3D untereinander dient. Der Bus 2 weist ferner Versorgungsleitungen 5, 6 auf. Im vorliegenden Ausführungsbeispiel weist die Versorgungsleitung 5 ein erstes Versorgungspotenzial VBB, beispielsweise ein positives Batteriepotenzial VBB, auf, während die zweite Versorgungsleitung 6 mit einem zweiten Versorgungspotenzial GND, beispielsweise dem Potenzial der Bezugsmasse GND, beaufschlagt ist. Über die Versorgungsleitungen 5, 6 lassen sich die Busteilnehmer 3A - 3D mit Energie versorgen.

Ein jeweiliger Busteilnehmer 3A - 3D weist einen Transceiver 7A - 7D sowie einen Mikrocontroller 8A - 8D auf. Ein Transceiver 7A - 7D stellt die physikalische Anbindung des jeweiligen Busteilnehmers 3A - 3D an die Eindrahtbusleitung 4 her. Ein jeweiliger Mikrocontroller 8A - 8D weist jeweils eine Busschnittstelle 9A - 9D auf. Eine jeweilige Busschnittstelle 9A - 9D weist zumindest einen Eingang zum Empfang von Daten und zumindest einen Ausgang zum Senden von Daten auf.

Im vorliegenden Ausführungsbeispiel ist die Busschnittstelle 9A als herkömmliche Busschnittstelle ausgebildet, wohingegen die Busschnittstellen 9B - 9D der Busteiler 3B - 3D als UART-Busschnittstellen ausgebildet sind.

Diese asynchronen seriellen UART-Schnittstellen 3B - 3D, die in Form eines UARTs (Universal Asynchronous Receiver Transmitter) als Hardwarekomponente bereits in den meisten Mikrocontrollern enthalten ist, sind mit ihrem Sende- und ihrem Empfangskanal auf demselben Kommunikationsbus 4 aufgeschaltet. Dadurch kann ein zu sendendes Signal, das von einem der am Bus 2 angeschlossenen Busteilnehmer 3A - 3D - einschließlich des sendenden Busteilnehmers - über den Empfangskanal jedes UARTs empfangen werden. Somit ergibt sich ein Byte-Broadcast-Medium, über das alle an der Eindrahtbusleitung 4 angeschlossenen Busteilnehmer 3A - 3D gleichberechtigt kommunizieren können.

Um verschiedene Busteilnehmer 3A - 3D nacheinander den sendenden Zugriff auf die Eindrahtbusleitung 4 zu ermöglichen, weist die jeweilige Busschnittstelle 9A - 9D ein Protokoll zur Vergabe der Schreibberechtigung auf, damit nicht von verschiedenen Busteilnehmern 3A - 3D verschiedene Signale gleichzeitig gesendet werden. Dies würde zur Datenkorruption bzw. zu einem Datenverlust führen, den es unter allen Umständen zu vermeiden gilt.

Die Grundidee eines erfindungsgemäßen UART-Bussystems 1 besteht darin, die Sende- und Empfangsschnittstellen 9A - 9D der einzelnen UART-Schnittstellen aller vernetzter Mikrocontroller 8A - 8D des UART-Bussystems 1 über einen einfachen Transceiver derart auf einen Eindrahtbus 4 zu schalten, dass jedes Byte, das von einem der Mikrocontroller 8A- 8D gesendet wird, theoretisch von allen am Bus 4 angeschlossenen Mikrocontrollern 8A - 8D einschließlich dem sendenden Mikrocontroller empfangen werden kann. Das Busmanagement erfolgt dabei verteilt, so dass beim Ausfall eines Busteilnehmers 3A - 3D nach einer kurzen Reinitialisierung die am Bus 4 verbliebenden Busteilnehmer 3A - 3D in vollen Umfang weiter kommunizieren können. Wird im Gegenzug ein weiterer Busteilnehmer dem Bus 4 hinzugefügt oder ein ausgefallener Busteilnehmer reaktiviert, so integriert sich dieser selbständig wieder in den logischen Ring der aktiven Komponente des UART-Bussystems 1.

Kombiniert wird dies typischerweise mit einem softwaregesteuerten Busvergabemechanismus, dem sogenannten Token Passing. Bei diesem Busvergabemechanismus wird die Sendeberechtigung in Form einer speziellen Nachricht (Token) über den Bus 4 zwischen den beteiligten Busteilnehmer 3A - 3D ausgetauscht. Dabei darf lediglich der Busteilnehmer 3A - 3D, der gerade das Token besitzt, auf den Bus 4 zugreifen und Daten senden.

Hat der Busteilnehmer 3A - 3D, der den Token besitzt, keine zu sendenden Daten mehr, so gibt er das Token an den nachfolgenden Busteilnehmer 3A - 3D weiter. So kann umläufig jeder Busteilnehmer 3A - 3D regelmäßig sendend auf den Bus 4 zugreifen. Denkbar wäre allerdings auch ein anderer Busvergabemechanismus, zum Beispiel das so genannte Pulling.

Das UART-Bussystem bietet aufgrund seiner kostengünstigen Implementierbarkeit, seiner Unabhängigkeit zu einer spezifischen Mikrocontroller-Hardware und seinen maßschneiderbaren Übertragungseigenschaften eine ideale Plattform zur kostengünstigen Vernetzung von Mikrocontrollern in verteilten Anwendungen mit geringen Bandbreitenanforderungen. Besonders hervorzuheben ist auch die einfache und weitgehend Betriebssystem unabhängige Anbindung von PCs oder anderen Geräten über eine so genannte RS232-Schnittstelle. Diese bietet zum Beispiel eine besonders günstige Möglichkeit zur zeitweisen oder dauerhaften Ankopplung von Diagnose-, Parametrisierungs- oder Überwachungs-PCs direkt an den Bus.

Das Bussystem 1 in Figur 1 erlaubt somit in vorteilhafter Weise eine symmetrische Vernetzung verschiedener Busteilnehmer 3A - 3D bzw. der entsprechenden Mikrocontroller 8A - 8D mit einem Minimum an zusätzlichen Komponenten. Auch kann die Busverkabelung bei elektrischer Kodierung der Signale mit absoluten Spannungspegeln oder differenziellen Spannungspegeln sehr einfach eingehalten werden.

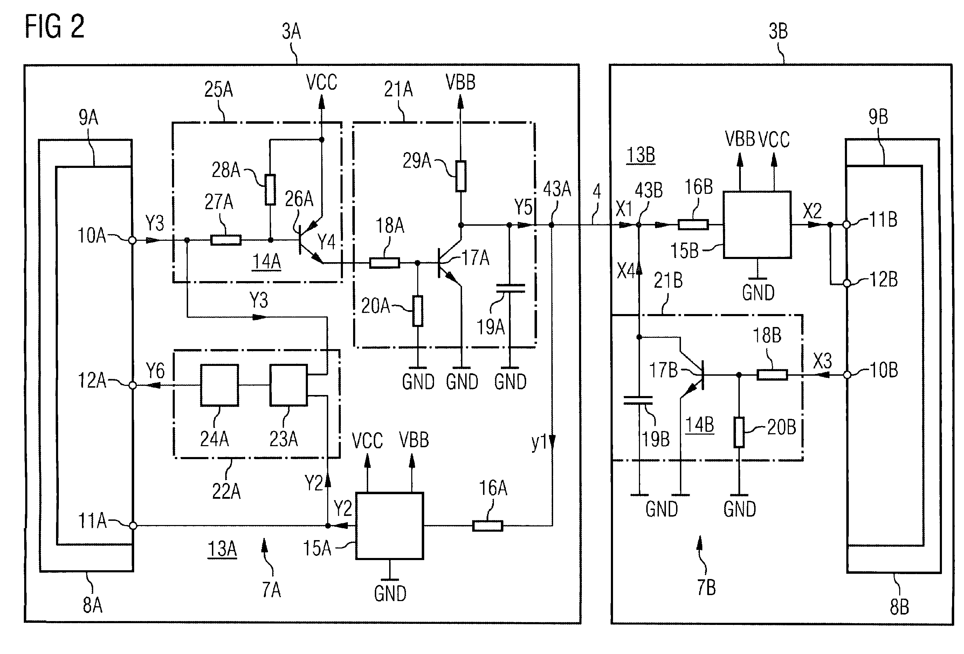

Figur 2 zeigt anhand eines Schaltbildes ein erstes Beispiel eines Teils des UART-Bussystems aus Figur 1 mit zwei Busteilnehmern 3A, 3B.

Der Busteilnehmer 3B weist einen Mikrocontroller 8B mit UART-Busschnittstelle 9B auf. Diese UART-Busschnittstelle 9B weist einen UART-Sendeausgang 10B sowie einen UART-Empfangseingang 11B auf. Ferner ist ein Interupt-Eingang 12B vorgesehen. Über die Eingänge 11B, 12B und den Ausgang 10B der Schnittstelle 9B ist der Mikrocontroller 8B mit der Eindrahtbusleitung 4 gekoppelt. Der Busteilnehmer 3B weist ferner einen einfachen, üblicherweise verwendeten Transceiver 7B auf.

Im Unterschied zu der Busschnittstelle 9B ist die Busschnittstelle 9A des Busteilnehmers 3A nicht als UART-Schnittstelle ausgebildet. Die Busschnittstelle 9A weist einen Sendeausgang 10A auf, der als Output-Compare-Ausgang (TxD) ausgebildet ist. Ferner ist ein Eingang 11A vorgesehen, der als Input-Capture-Eingang (RxD) ausgebildet ist. Schließlich ist ein weiterer Eingang 12A vorgesehen, der als Interupt-Eingang ausgebildet ist. Dieser Interupt-Eingang 12A ist intern mit einer Schmitt-Trigger-Schaltung verbunden. Der Busteilnehmer 3A weist ebenfalls einen Transceiver 7A auf.

Nachfolgend wird zunächst der Aufbau des Transceivers 7B beschrieben und anschließend der des Transceivers 7A.

Der Transceiver 7B weist einen Eingangspfad 13B sowie einen Ausgangspfad 14B auf. Der Eingangspfad 13B verbindet die Eingänge 11B, 12B mit der Eindrahtbusleitung 4, wohingegen der Ausgangspfad 14B den Ausgang 10B mit der Eindrahtbusleitung 4 verbindet. Im Eingangspfad 13B ist eine Schaltungseinrichtung 15B vorgesehen, der ein Schutzelement 16B, zum Beispiel ein Widerstand, vorgeschaltet ist. Die Schaltungseinrichtung 15B ist mit Versorgungsanschlüssen für das erste Versorgungspotenzial VBB und das zweite Versorgungspotenzial GND verbunden. Ferner ist die Schaltungseinrichtung 15B mit einem Anschluss mit einem dritten Versorgungspotenzial VCC verbunden. Die Schaltungseinrichtung 15B dient der Pufferung eines eingangsseitig über die Eindrahtleitung 4 eingekoppelten Bussignals X1. Dieses Bussignal X1 wird in der Schaltungseinrichtung 15b von einer ersten Versorgungsspannung VBB-GND auf eine zweite Versorgungsspannung VCC-GND herunter transformiert. Beispielsweise wird die Versorgungsspannung in der Schaltungseinrichtung 15B von 12 V auf 5 V herab gesetzt. Das von der Schaltungseinrichtung 15B ausgangsseitig bereitgestellte Signal X2 wird den beiden Eingängen 11B, 12B zugeführt.

Der Ausgangspfad 14B weist einen Ausgangstreiber 21B auf. Der Ausgangstreiber 21B enthält einen Transistor 17B, der über ein vom Ausgang 10B bereit gestelltes Sendesignal X3 angesteuert wird. Zwischen dem Ausgang 10B und dem Steuereingang des Transistors 17B ist ferner ein Vorwiderstand 18B zur Einstellung des Steuerpotenzials angeordnet. Der Transistor 17B erzeugt ausgangsseitig ein Signal X4, welches einerseits über die Eindrahtbusleistung 4 übertragen wird und andererseits als Echo in den Eingangspfad 13B rückgekoppelt wird. Parallel zu der gesteuerten Strecke des Transistors 17B ist ein Pufferkondensator 19B, parallel zu den Basis-Emitter-Anschlüssen des Transistors 17B ein Widerstand 20B angeordnet.

Im Unterschied zu dem Transceiver 7B weist der Transceiver 7A zusätzlich eine Vergleichereinrichtung 22A im Eingangspfad 13A auf. Die Vergleichereinrichtung 22A enthält im vorliegenden Ausführungsbeispiel ein XOR-Gatter (XOR = Exclusive-ODER) 23A, dem ein Tiefpassfilter 24A nachgeschaltet ist. Das Tiefpassfilter 24A dient der Einstellung einer geeigneten Verzögerung aufgrund von unterschiedlichen Signallaufzeiten der Signale im Sendepfad 13A und Empfangspfad 14A. Das Tiefpassfilter 24A ist ausgangsseitig mit dem Interupt-Eingang 12A verbunden. Das XOR-Gatter 23A weist zwei Eingänge auf, wobei ein erster Eingang mit dem Ausgang der Schaltungseinrichtung 15A und der zweite Eingang mit dem Sendeausgang 10A der Schnittstelle 9A verbunden ist. Dem XOR-Gatter 23A werden somit das Ausgangssignal Y2 der Schaltungseinrichtung 15A sowie das Ausgangssignal Y3 der Schnittstelle 9A zugeführt.

Im Unterschied zu dem Transceiver 7B weist der Transceiver 7A zusätzlich auch einen Pegelwandler 25A auf, der im Sendepfad 14A angeordnet ist. Der Pegelwandler 25A enthält einen zweiten Transistor 26A, der steuerseitig über einen Vorwiderstand 27A mit dem Sendeausgang 10A verbunden ist. Der Transistor 26A wird über das Versorgungspotenzial VCC versorgt. Zwischen dem Versorgungsanschluss für das Versorgungspotenzial VCC und dem Steueranschluss des Transistors 26A ist ein Widerstand 28A zur Einstellung eines Pegels vorgesehen. Ausgangsseitig ist der Transistor 26A mit dem Eingang des Ausgangstreibers 21A verbunden.

Nachfolgend sei die Funktionsweise des Transceivers 7A kurz beschrieben. Es sei angenommen, dass bei einem Busteilnehmer, der sendeberechtigt (dominant) ist, die zu sendenden Daten eine logische "Null" (LOW) aufweisen. Das bedeutet gleichermaßen, dass eine logische "Eins" (HIGH) einen rezessiven Zustand der Eindrahtbusleitung bzw. eines Busteilnehmers bezeichnet.

Der Ausgangstreiber 21A des Bus-Teilnehmers 3A weist ähnlich wie der Ausgangstreiber 21B des Busteilnehmers 3B einen Treibertransistor 17A, einen Vorwiderstand 18A, einen Pufferkondensator 19A sowie einen Widerstand 20A auf. Zusätzlich weist der Ausgangstreiber 21A einen Widerstand 29A auf, der als pull-up-Widerstand ausgebildet ist und der zwischen dem Anschluss für das positive Versorgungspotential VBB und dem kollektorseitigen Anschluss des Treibertransistors 17A angeordnet ist. Ein Abgriff zwischen dem kollektorseitigen Anschluss des Treibertransistors 17A und dem pull-up-Widerstand 29A bildet den Ausgang der Treiberstufe 21A. Dieser Ausgang der Treiberstufe 21A ist mit dem Eingang/Ausgangsanschluss 43A des Busteilnehmers 3A verbunden.

Im Sendebetrieb der Schnittstelle 9A wird ein zu sendendes Datum Y3 am Ausgang 10A bereitgestellt und vom Pegelwandler 25A in ein Signal Y4 gewandelt, wobei das Signal Y3 dabei invertiert, also Vorzeichen verkehrt wird. Dieses Signal Y4 wird vom Ausgangstreiber 21A in ein Signal Y5 gewandelt, welches auf die Eindrahtbusschnittstelle 4 gelegt wird. Auch das Signal Y5 ist gegenüber dem Signal Y4 invertiert. Zumindest ein Teil Y1 dieses gesendete Signal Y5 wird gleichermaßen als Echo in den Empfangspfad 13A rückgekoppelt. Das daraus von der Schaltereinrichtung 15A gewandelte und gepufferte Signal Y2 wird einem ersten Eingang des XOR-Gatters 23A zugeführt. Dem zweiten Eingang des XOR-Gatters 23A wird das zu sendende Signal Y3 zugeführt. Für den Fall, dass kein anderer Busteilnehmer auf die Eindrahtbusleitung 4 zugreift, und für den Fall, dass die Eindrahtbusleitung keinen Kurzschluss oder Leerlauf aufweist, weisen die beiden Signale Y2, Y3 am Eingang des XOR-Gatters 23A eine logische "Null" auf. Am Ausgang des XOR-Gatters 23A liegt somit ebenfalls eine logische "Null" an. Die Vergleichereinrichtung 22A erkennt somit, dass kein Kurzschluss bzw. keine Zugriffskollision vorliegt und löst damit auch keinen Interupt am Eingang 12A aus.

Andernfalls, also im Falle eines Zugriffskonflikts und/oder eines Kurzschlusses der Busleitung 4, weisen die Signale Y2, Y3 unterschiedliche logische Pegel auf. In diesem Fall würde über den Eingang 12A ein Interupt ausgelöst werden.

Die Funktionalität dieser Diagnose für eine Zugriffskollision bzw. einen Kurzschluss an der Eindrahtbusleitung 4 kann zusätzlich oder alternativ auch durch eine mehr oder wenige aufwändige Software durchgeführt werden. Der besondere Vorteil bei der hardwaremäßigen Realisierung entsprechend Figur 2 besteht allerdings darin, dass diese hardwaremäßige Diagnose eine sehr viel höhere Datenübertragungsrate und damit eine größere Geschwindigkeit der Datenkommunikation ermöglicht.

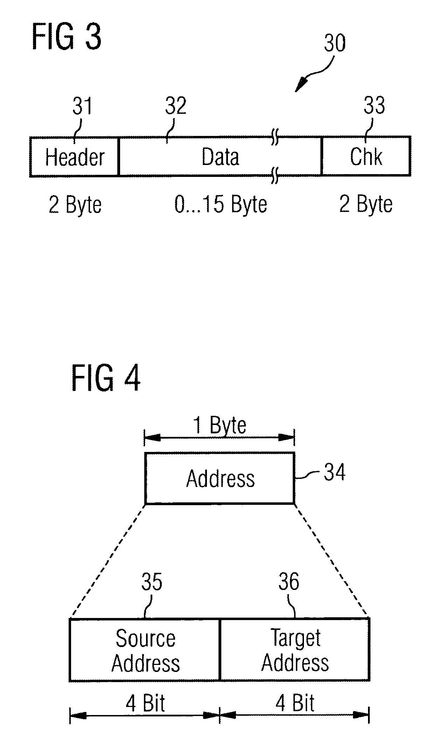

Figur 3 zeigt ein Datenrahmenformat für eine Datenkommunikation in einem erfindungsgemäßen Bussystem. Ein Datenrahmen 30 enthält ein beispielsweise 2 Byte breiten "Header" 31, ein beispielsweise 0 - 15 Byte breites Datum 32, in dem die Nutzdaten enthalten sind, sowie ein beispielsweise 2 Byte breites Feld 33, in dem eine Prüfsumme zur Überprüfung des gesendeten Datums 32 enthalten ist. In dem Header 31 können neben der Adresse zusätzlich auch Anwender definierte Nachrichten-Typ-ID-Daten und Längenfeldinformationen enthalten sein.

Der Header 31 enthält also insbesondere die Adresse eines Busteilnehmers, für den die zu sendenden Daten 32 bestimmt sind. Aus diesem Grunde werden diese Adressdaten vor der Übermittlung der eigentlichen, zu sendenden Nutzdaten 32 übermittelt. Anhand dieser Adressdaten soll erfindungsgemäß zusätzlich überprüft werden, ob eine Zugriffskollision vorliegt. Eine Zugriffskollision liegt dann vor, wenn zumindest zwei Busteilnehmer mehr oder weniger gleichzeitig über dieselbe Eindrahtbusleitung Daten senden wollen. Da aber lediglich einer dieser Busteilnehmer, nämlich bzw. der anhand der Adressdaten als dominant erkannte Busteilnehmer einen Buszugriff erhält, muss verhindert werden, dass die übrigen Busteilnehmer zur gleichen Zeit Daten über ihre Busschnittstelle senden. Anhand dieses Verfahrens kann damit eine Priorisierung bzw. Arbitrierung vorgenommen werden. Die Arbitrierung ist hier aber nicht mit der Busarbitrierung eines CANbasierten Bussystems zu vergleichen. Die Überprüfung der Buszugriffsberechtigung erfolgt hier software- oder hardwaremä-ßig dahingehend, welcher Busteilnehmer dominant ist.

Um dies zu verhindern, muss jeder Busteilnehmer seinerseits feststellen, ob bereits ein anderer Busteilnehmer dominant ist und die Zugriffsberechtigung auf den Bus hat. Der einfachste Weg, um dies festzustellen, besteht darin, die abfallenden Flanken eines gesendeten Signal, welches durch das Startbit einer Übertragung erzeugt wird, in der Vergleichereinrichtung 22A zu überprüfen. Dieses Verfahren ist auch als so genanntes "Carrier Sense Multiple Access"-Verfahren (CSMA-Verfahren) bekannt. Bei dem "Carrier Sensing"-Verfahren ist der Bus typischerweise rezessiv. Das Startbit ist hier immer auf "0" gesetzt. Beim "Carrier Sensing"-Verfahren wird zunächst überprüft, ob irgendein anderer Busteilnehmer dominant ist. Hier gilt das so genannte "First come, first serve"-Prinzip, d.h. der erste Busteilnehmer, der eine Zugriffsanfrage auf den Bus stellt, ist auch zugriffsberechtigt. Üblicherweise wird eine solche Zugriffsanfrage von einem anderen Busteilnehmer auch als solche erkannt. In relativ seltenen Fällen kann es aber dazu kommen, dass mehrere Busteilnehmer mehr oder weniger gleichzeitig über denselben Eindrahtbus Daten senden möchten. In diesen relativ seltenen Fällen kann es zu einer Zugriffskollision kommen. Es besteht daher hier der besondere Bedarf eine solche Zugriffskollision möglichst schnell zu erkennen, d.h. möglichst innerhalb der ersten Bits oder Bytes einer Adresse.

Um jedem einzelnen Busteilnehmer zu ermöglichen, eine solche Buszugriffskollision zu detektieren, weist erfindungsgemäß ein erstes Byte eines Datenrahmens, welches zum Beispiel in dem Header 31 vorgesehen ist, ein eben für diesen Busteilnehmer kennzeichnendes und damit einzigartiges Bitmuster auf. Dieses Bitmuster kann vorteilhafterweise gleichsam die Adresse dieses Busteilnehmers darstellen.

Figur 4 zeigt das Adressformat eines 1 Byte breiten Adressfeldes 34 eines Busteilnehmers. Das Adressfeld 34 enthält ein erstes 4 Bit breites Adressfeld 35 und ein zweites 4 Bit breites Adressfeld 36. Im ersten Adressfeld (Quelladresse) 35 ist die Adresse desjenigen Busteilnehmers abgelegt, von dem gerade Daten gesendet werden, und in dem zweiten Adressfeld (Zieladresse) 36 ist die Adresse desjenigen Busteilnehmers abgelegt, an den die Daten gesendet werden sollen. Die Adressen eines Busteilnehmers können mehr oder weniger beliebig gewählt werden. Allerdings sollten sie jeweils einzigartig und möglichst kennzeichnend für eben diesen Busteilnehmer sein. Unter Verwendung dieser Adressen kann jeder Busteilnehmer des Bussystems eine Buszugriffskollision zu detektieren.

Die Adresse eines Busteilnehmers kann beispielsweise wie folgt aussehen:
0001
0010
0100
1000
Jeder Busteilnehmer kann dabei eine dieser Adressen aufweisen, wobei darauf zu achten ist, dass eine Adresse jeweils nur einfach vergeben ist. Bei Verwendung dieser Adressen kann damit auf sehr einfache Weise eine Zugriffskollision von jedem Busteilnehmer detektiert werden.

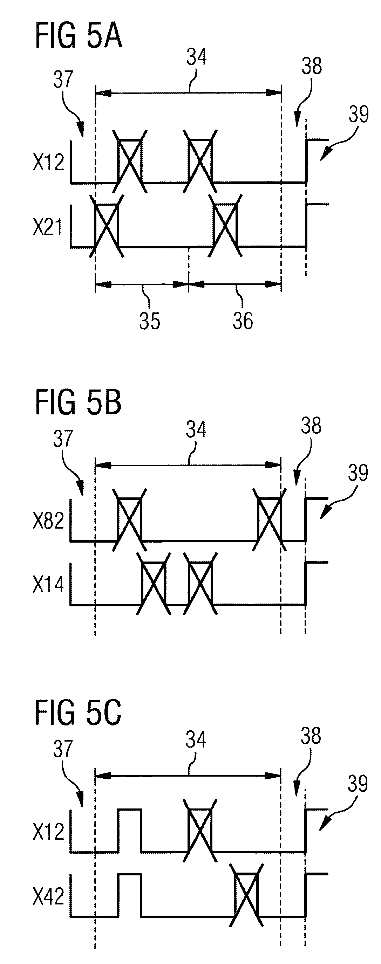

Figur 5 zeigt anhand von drei Teilfiguren (A) - (C) schematische Darstellungen für den Vergleich der Adressen unterschiedlicher Busteilnehmer zur Veranschaulichung des erfindungsgemäßen Verfahrens zur Detektion einer Zugriffskollision. Figur 2 zeigt anhand eines Schaltbildes ein erstes Beispiel eines Teils des UART-Bussystems aus Figur 1 mit zwei Busteilnehmern 3A, 3B.

Einem jeweiligen Adressfeld 34 ist ein Start-Bit 37 vorangestellt, welches typischerweise eine logische "0" aufweist. Das Start-Bit 37 zeigt an, dass nachfolgend eine Adresse und somit eine Datenübertragung beginnt. Dem Adressfeld 34 ist ein Parity-Bit 38 sowie ein Stopp-Bit 39 nachgeordnet. Das Stopp-Bit 39, welches typischerweise eine logische "1" beinhaltet, zeigt ein Ende der Adresse an. In den Figuren 5(A) - 5(C) sind jeweils zwei Adressfelder 34 von Busteilnehmern, die eine Zugriffsanfrage auf den Eindrahtbus abgeben dargestellt. In Figur 5(A) wird für diese Zugriffsanfrage das Kürzel x12 verwendet, welches anzeigt, dass der Busteilnehmer mit der Adresse "1" auf den Busteilnehmer mit der Adresse "2" Daten senden möchte. Im unteren Teil der Figur 5(A) ist das Kürzel x21 angegeben, d.h. der Busteilnehmer "2" möchte Daten zum Busteilnehmer "1" senden. In den Figuren 5(B) - 5(C) sind jeweils Datenübertragungen zwischen anderen Busteilnehmern dargestellt.

Figur 5 zeigt drei Beispiele (Figuren 5(A) - (C)), bei denen jeweils die Adressen entsprechend Figur 4 verwendet werden. Die Kreuze bezeichnen Bits, die aufgrund einer Zugriffskollision zu einem Echo geführt haben, welches einen Interupt auslöst. Da jeder Busteilnehmer seinen dezidierte Adressbits aufweist, kann es so nicht zu der Konstellation kommen, das lediglich ein Busteilnehmer die Zugriffskollision detektiert. Vielmehr wird diese Zugriffskollision vorteilhafterweise von allen auf den Bus zugreifenden Busteilnehmern detektiert. Die Situation, dass lediglich ein Busteilnehmer eine Zugriffskollision detektiert kann damit nicht mehr vorkommen.

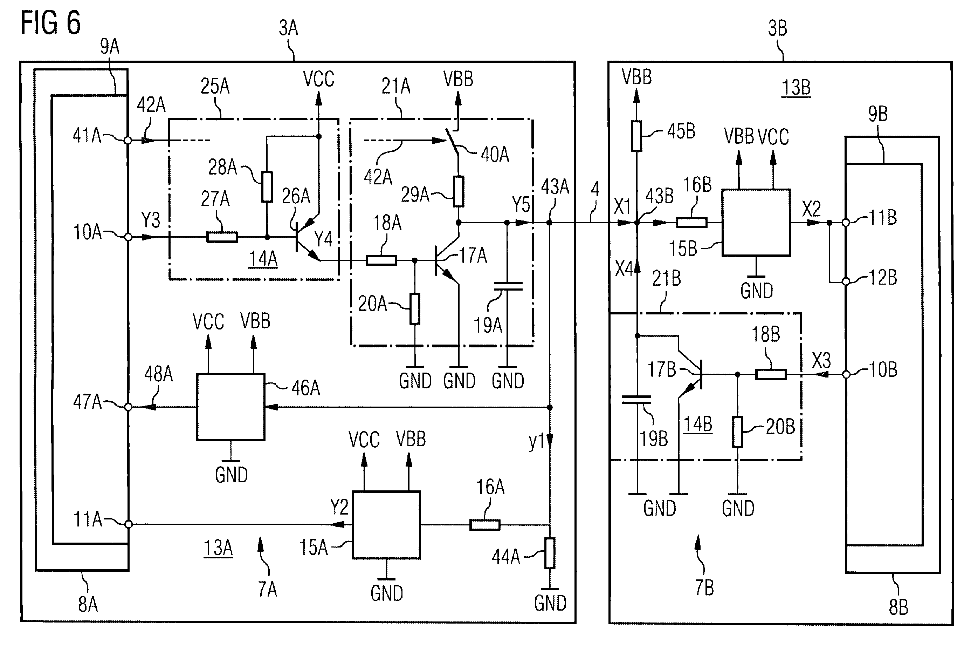

Figur 6 zeigt ein zweites Beispiel eines Teils des UART-Bussystems aus Figur 1, welches mit einer Diagnoseeinrichting ausgestattet ist.

Im Unterschied zu dem Ausführungsbeispiel in Figur 2 sind in dem zweiten Ausführungsbeispiel in Figur 6 die Vergleicherschaltung 22A und der Interupt-Eingang 12A des Busteilnehmers 3A der besseren Übersichtlichkeit wegen nicht dargestellt worden, wenngleich diese Elemente selbstverständlich auch zusätzlich vorhanden sein können.

Im Unterschied zu dem Ausführungsbeispiel in Figur 2 ist der pull-up-Widerstand 29A als schaltbarer Widerstand ausgebildet. Zur Implementierung dieser Funktionalität ist zwischen dem Anschluss für das positive Versorgungspotential VBB und dem pull-up-Widerstand 29A ein steuerbarer Schalter 40A angeordnet. Der steuerbare Schalter 40A ist vorteilhafterweise als Transistor, zum Beispiel als Bipolartransistor, MOSFET, JFET, etc., ausgebildet. Der Steueranschluss des steuerbaren Schalters 40A ist mit einem Steuerausgang 41A des Mikrocontrollers 8A verbunden. Der steuerbare Schalter 40A lässt sich so über den Steuerausgang 41A mit einem Steuersignal 42A beaufschlagen.

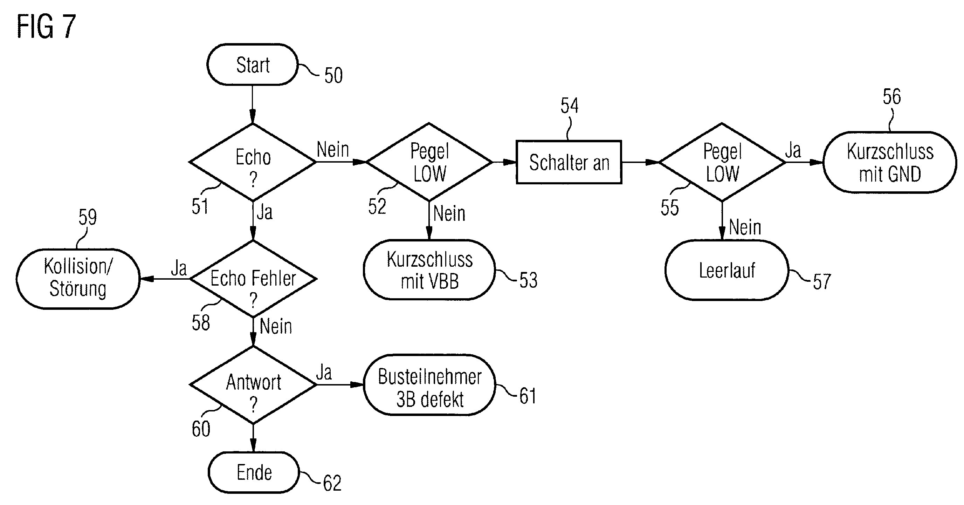

Auf der Seite des Busteilnehmers 3A ist zwischen dem Eingangs/Ausgangsanschluss 43A und dem Anschluss für das Bezugspotenzial GND ein hochohmiger Widerstand, zum Beispiel ein pull-down-Widerstand 44A, angeordnet. Auf der Seite des Busteilnehmers 3B ist zwischen dem Eingangs/Ausgangsanschluss 43B und dem Versorgungsanschluss für das positive Versorgungspotential VBB ein niederohmiger Widerstand 45B angeordnet. Die Widerstände 29A, 44A, 45B, der steuerbare Schalter 40A sowie die entsprechenden Elemente 41A, 46A, 47A bilden die Diagnoseeinrichtung, deren Funktion nachfolgend anhand von Figur 7 noch detailliert beschrieben wird. Mittels dieser Diagnoseschaltung 29A, 40A, 41A, 44A, 45B, 46A, 47A lässt sich ein Kurzschluss der Eindrahtbusleitung 4 gegen das positive oder das negative Versorgungspotenzial VBB, GND bzw. ein Leerlauf der Busleitung 4 detektieren. Je nach vorliegenden Fehlerfall liegt am Eingang/Ausgangsanschluss 43A ein eben für diesen Fehlerfall typisches Potenzial an. Ein von diesem Potenzial abgeleitetes Diagnosesignal ist einem Diagnoseeingang 47A des Mikrocontrollers 8A über eine Schaltungseinrichtung 46A zuführbar. Die Schaltungseinrichtung 46A ist zum Beispiel äquivalent zu den Schaltungseinrichtungen 15A, 15B aufgebaut und dient der Pufferung und Wandlung eines in die Schaltungseinrichtung 46A eingangsseitig eingekoppelten Signals.

Figur 7 zeigt ein Blockschaltbild anhand dem das erfindungsgemäße Diagnoseverfahren näher erläutert wird, welches in einem Busteilnehmer entsprechend Figur 6 durchgeführt wird.

Der Busteilnehmer 3A weist erfindungsgemäß eine Diagnosevorrichtung auf, über die die Eindrahtbusleitung 4 sowie ein über diese Eindrahtbusleitung 4 mit dem Busteilnehmer 3A kommunizierender weiterer Busteilnehmer 3B diagnostizierbar sind. Zu diesem Zwecke ist ein Diagnosemodus zur Diagnose des weiteren Busteilnehmers 3B sowie der Eindrahtbusleitung 4 vorgesehen. Nach dem Start des Diagnosemodus (50) wird überprüft, ob der Busteilnehmer 3A auf ein vom Busteilnehmer 3A gesendeten Signal Y3 hin ein davon abhängiges Echosignal Y1 empfängt (51). Im Falle, dass kein Echosignal Y1 empfangen wird, wird überprüft, ob das Diagnosesignal 48A am Diagnoseeingang 47A einen niedrigen logischen Pegel (LOW, "0") aufweist (52). Weist das in den Diagnoseeingang 47A eingekoppelte Diagnosesignal 48A einen hohen logischen Pegel (HIGH, "1") auf, dann liegt ein Kurzschluss der Eindrahtbusleitung 4 mit dem positiven Versorgungspotential VBB vor (53). Weist das Diagnosesignal 48A hingegen einen niedrigen logischen Pegel auf, dann wird der steuerbare Schalter 40A über das Steuersignal 42A eingeschaltet (54). Anschließend wird wiederum das Potenzial des in den Diagnoseeingang 47A eingekoppelten Diagnosesignals 48A überprüft (55). Weist dieses Diagnosesignal 48A einen niedrigen logischen Pegel auf, dann liegt ein Kurzschluss der Eindrahtbusleitung 4 mit dem Potenzial der Bezugsmasse GND vor. Im anderen Falle, das heißt bei einem hohen logischen Pegel des Diagnosesignals 48A, liegt ein Leerlauf der Eindrahtbusleitung 4 (offene oder unterbrochene Eindrahtbusleitung) vor (57).

Wird ein Echosignals Y1 empfangen (51), dann wird zunächst überprüft, ob das Echosignal Y1 mit dem jeweils gesendeten Signal Y3 korreliert, also ob ein Echofehler vorliegt (58). Liegt ein falsches oder fehlerhaftes Echosignal Y1 vor, dann kann auf eine Störung der Eindrahtbusleitung 4 geschlossen werden (59). Die Störung kann sich beispielsweise durch Überlagerung von Störsignalen oder durch eine Kollision mehrerer Busteilnehmer 3B - 3D auf dieselbe Eindrahtbusleitung 4 ergeben. Stimmt das Echosignal Y1 mit dem gesendeten Signal Y3 überein, wird zunächst überprüft, ob der weitere Busteilnehmer 3B ein Antwortsignal X4 gesendet hat (60). Liegt kein Antwortsignal X4 von einem weiteren Busteilnehmer 3B vor, dann kann darauf geschlossen werden, dass der entsprechende Busteilnehmer 3B fehlerhaft oder defekt ist (61). Andernfalls, das heißt im Falle eines korrekten Antwortsignals X4 des weiteren Busteilnehmers 3B, wird das Diagnoseverfahren beendet (62).

Das oben anhand des Blockschaltbildes in Figur 7 beschriebene Verfahren setzt allerdings voraus, dass der Widerstand 44A sehr viel größer dimensioniert ist als der Widerstand 45B. Durch diese unterschiedliche Dimensionierung der beiden Widerstände 44A, 45B können im Diagnosebetrieb bedarfsgemäß solche Potenziale am Eingangs/Ausgangsanschluss 43A abgegriffen werden, die die verschiedenen Diagnosesignale 48A liefern, welche jeweils charakteristischen für den entsprechenden Fehlerfall sind. Darüber hinaus wird im Diagnosebetrieb durch diese Maßnahme der Ruhestrom, der zwischen den beiden Busteilnehmern 3A, 3B über die Eindrahtbusleitung 4 fließt, signifikant reduziert, was einerseits einen geringeren Stromverbrauch und andererseits eine geringere Belastung der elektronischen Komponenten dieser Busteilnehmer 3A, 3B bewirkt.

Obgleich die vorliegenden Erfindung anhand eines bevorzugten Ausführungsbeispiels beschrieben wurde, ist sie darauf nicht beschränkt, sondern auf vielfältige Art und Weise modifizierbar.

So sei die Erfindung nicht notwendigerweise auf ein UART-Bussystem beschränkt, sondern lässt sich selbstverständlich auf beliebige Eindrahtbussysteme erweitern.

Auch seien die Busschnittstellen und Transceiver nicht notwendigerweise auf den in dem vorliegenden Ausführungsbeispiel dargestellten Aufbau beschränkt. Vielmehr wurde zur besseren Darstellung der Erfindung insbesondere hinsichtlich der Ausgestaltung der Transceiver bewusst ein schaltungstechnisch sehr einfacher Aufbau gewählt. Selbstverständlich lassen sich hier auch je nach der gewünschten Applikation und Anwendung beliebig komplexere Transceiver-Schaltungen bereitstellen. Insbesondere weisen die Transceiver typischerweise im Empfangspfad sehr viel aufwändigere Schutzelemente und Pufferschaltungen auf. Auch können als Treiberschaltungen beliebig andere Treiber, beispielsweise Tristate-Treiber, Gegentaktausgangsstufen, Differenzverstärker oder dergleichen, verwendet werden.

Auch sei das erfindungsgemäße Verfahren und die Datenformate nicht auf die angegebenen Zahlenangaben beschränkt. Diese wurden lediglich beispielhaft angegeben.

In dem vorstehenden Ausführungsbeispiel wurde davon ausgegangen, dass eine logische "Null" dominant ist und eine logische "Eins" rezessiv ist. Denkbar wäre selbstverständlich auch eine umgekehrte Logik. In diesem Falle müsste insbesondere die Vergleicherschaltung geringfügig geändert werden, zum Beispiel durch Invertierung der Signale.

In den vorstehenden Ausführungsbeispielen wurde jeweils anhand eines Adressfeldes oder einer Adresse festgestellt, ob der Eindrahtbus einen Kurzschluss aufweist bzw. ob eine Zugriffskollision auf diesen Eindrahtbus vorliegt. Erst anschließend wurde festgelegt, welcher Busteilnehmer die Zugriffsberechtigung auf den Eindrahtbus erhält. Diese Überprüfung und Festlegung muss jedoch nicht notwendigerweise anhand eines Adressfeldes oder der Adressen der verschiedenen Busteilnehmer erfolgen. Vielmehr kann hier sehr vorteilhaft ein beliebiges Datenfeld herangezogen werden, welches einen entsprechenden Funktionscode oder einen Identifikationscode aufweist, der eine mehr oder weniger eindeutige Identifizierung der jeweiligen Adressaten zulässt. Über diese Identifizierung kann jeder Busteilnehmer feststellen, welcher andere Busteilnehmer noch auf den Bus zugreifen möchte.

### Bezugszeichenliste

- 1: (UART-)Bussystem
- 2: Bus
- 3A - 3D: Busteilnehmer, Knoten
- 4: (Eindraht-)Busleitung
- 5: Versorgungsleitung
- 6: Versorgungsleitung
- 7A - 7D: Transceiver
- 8A - 8D: Mikrocontroller
- 9A - 9D: (Bus-)Schnittstellen
- 10A, 10B: Sendeausgang
- 11A, 11B: Empfangseingang
- 12A, 12B: Interupt-Eingang
- 13A, 13B: Empfangspfad
- 14A, 14B: Sendepfad
- 15A, 15B: Schaltungseinrichtung
- 16A, 16B: Schutzelement
- 17A, 17B: Treibertransistor
- 18A, 18B: Vorwiderstand
- 19A, 19B: Pufferkondensator
- 20A, 20B: Widerstand
- 21A, 21B: Ausgangstreiber
- 22A: Vergleicherschaltung
- 23A: XOR-Gatter
- 24A: Tiefpassfilter
- 25A: Pegelwandler
- 26A: Pegelwandlertransistor
- 27A: Vorwiderstand
- 28A: Widerstand
- 29A: (pull-up-)Widerstand
- 30: Datenrahmenformat
- 31: Header
- 32: Datenfeld
- 33: Feld für Prüfsumme
- 34: Adressfeld
- 35: erster Teil des Adressfelds
- 36: zweiter Teil des Adressfelds
- 37: Start-Bit
- 38: Parity-Bit
- 39: Stopp-Bit
- 40A: steuerbarer Schalter, MOSFET
- 41A: Steuerausgang
- 42A: Steuersignal
- 43A, 43B: Eingangs/Ausgangsanschlüsse
- 44A: (hochohmiger) Widerstand
- 45B: (niederohmiger) Widerstand
- 46A: Schaltungseinrichtung
- 47A: Diagnoseeingang
- 48A: Diagnosesignal
- 50 - 62: Verfahrensschritte

- VBB: (erstes, positives) Versorgungspotenzial
- GND: (zweites) Versorgungspotenzial, Bezugspotenzial
- VCC: Versorgungspotenzial
- X1, X2: Empfangssignale
- X3, X4: Sendesignale
- Y1, Y2: Empfangssignale
- Y3 - Y5: Sendesignale
- Y6: Interuptsignal

## Patentansprüche

1. Schaltungsanordnung (3A) eines Busteilnehmers (3A),
mit einem einzelnen Eingangs-/Ausgangsanschluss (43A), über den Busteilnehmer an einen Eindrahtbus eines UART-basierten Bussystems (1) angekoppelt sind,
mit einer nicht als UART-Schnittstelle ausgebildeten Schnittstellenschaltung (9A), enthaltend
- einen Output-Compare-Datenausgang (10A), der zum Ausgeben eines über den Eindrahtbus zu sendenden, binären ersten Datensignals (Y3) mit dem Eingangs-/Ausgangsanschluss gekoppelt ist,
- einen Input-Capture-Dateneingang (11A), der zum Aufnehmen eines binären zweiten Datensignals (Y2), welches von über den Eindrahtbus (4) empfangenen Datensignalen (Y1) und/oder von dem ersten Datensignal (Y2) abgeleiteten Echosignals (Y1) abgeleitet ist, mit dem Eingangs/Ausgangsanschluss bzw. mit dem Datenausgang (10A) gekoppelt ist,
- einen Interupteingang (12A) zur Einkopplung eines Interuptsignals (Y6),
mit einer als Hardwareschaltung ausgebildeten Vergleichereinrichtung (22A),
- die das erste Datensignal (Y3) mit dem zweiten Datensignal (Y2) vergleicht,
- die dazu ausgelegt ist, aus dem Vergleich des ersten und zweiten Datensignals (Y2, Y3) einen Zugriffskonflikt mehrerer auf den Eindrahtbus zugreifender Busteilnehmer (3A - 3D) zu erkennen und
- die im Falle eines erkannten Zugriffskonflikts das Interuptsignal (Y6) ausgibt,
mit einer Diagnoseeinrichtung (29A, 40A, 41A, 44A-47A) zur Diagnose eines Kurzschlusses und/oder eines Leerlaufes einer Eindrahtbusleitung (4) des Eindrahtbusses (4), wobei die Elemente der Diagnoseeinrichtung (29A, 40A, 41A, 44A-47A) über einen Eingangs/Ausgangsanschluss (43A) jeweils mit dem Eindrahtbus (4) gekoppelt sind.

2. Schaltungsanordnung nach Anspruch 1,
**dadurch gekennzeichnet,**
**dass** die Vergleichereinrichtung (22A) ein XOR-Gatter (23A) aufweist, die die ersten und zweiten binären Datensignale (Y2, Y3) bitweise miteinander vergleicht.

3. Schaltungsanordnung nach Anspruch 2,
**dadurch gekennzeichnet,**
**dass** die Vergleichereinrichtung (22A) ein dem XOR-Gatter (23A) nachgeschaltetes Tiefpassfilter (24A) aufweist, welches eine Verzögerung aufgrund von unterschiedlichen Signallaufzeiten des ersten und des zweiten Datensignals (Y2, Y3) einstellt.

4. Schaltungsanordnung nach einem der vorstehenden Ansprüche,
**dadurch gekennzeichnet,**
**dass** die Schnittstellenschaltung eine Interupteinrichtung aufweist, die einen Interupteingang (12A) zur Einkopplung des Interuptsignal (Y6) aufweist und die bei Vorliegen des Interuptsignals (Y6) eine Datenkommunikation des Busteilnehmers (3A) zu zumindest einem weiteren Busteilnehmer (3B - 3D) unterbricht oder stoppt.

5. Schaltungsanordnung nach einem der vorstehenden Ansprüche,
**dadurch gekennzeichnet,**
**dass** die Schnittstellenschaltung einen zwischen dem Dateneingang (11A) und dem Datenausgang (10A) einerseits und dem Eindrahtbus (4) andererseits angeordneten Transceiver (7A) aufweist, wobei der Transceiver (7A) einen Sendepfad (14A), in dem ein Ausgangstreiber (21A) angeordnet ist, und einen Empfangspfad (13A) aufweist.

6. Schaltungsanordnung nach Anspruch 5,
**dadurch gekennzeichnet,**
**dass** im Empfangspfad (13A) eine Pufferschaltung (15A) zur Pufferung eines eingangsseitig über den Eindrahtbus (4) eingekoppeltes erstes Datensignals (Y1) vorgesehen ist.

7. Schaltungsanordnung nach einem der Ansprüche 5 oder 6,
**dadurch gekennzeichnet,**
**dass** im Empfangspfad (13A) eine Spannungswandlerschaltung (15A) vorgesehen ist, die ein über den Eindrahtbus (4) eingekoppeltes erstes Datensignal (Y1) von einer ersten Versorgungsspannung (VBB-GND) auf eine zweite Versorgungsspannung (VCC-GND) herunter transformiert.

8. Schaltungsanordnung nach einem der Ansprüche 5 bis 7,
**dadurch gekennzeichnet,**
**dass** im Sendepfad (14A) ein Pegelwandler (25A) zur Wandlung des Pegels des zu sendenden ersten Datensignals (Y3) vorgesehen ist.

9. Schaltungsanordnung nach einem der vorstehenden Ansprüche,
**dadurch gekennzeichnet,**
**dass** die Schnittstellenschaltung zumindest einen weiteren Dateneingang, der als UART-Eingang ausgebildet ist, und zumindest einen weiteren Datenausgang, der als UART-Ausgang ausgebildet ist, aufweist.

10. Schaltungsanordnung nach einem der vorstehenden Ansprüche,
**dadurch gekennzeichnet,**
**dass** die Diagnoseeinrichtung (29A, 40A, 41A, 44A - 47A) einen mit einem Versorgungspotenzial (VBB, GND) verbindbaren ersten Widerstand (29A) enthält.

11. Schaltungsanordnung nach einem der vorherigen Ansprüche,
**dadurch gekennzeichnet,**
**dass** die Diagnoseeinrichtung (29A, 40A, 41A, 44A - 47A) einen steuerbaren Schalter (40A) aufweist, dessen Lastpfad zwischen dem ersten Widerstand (29A) und dem positiven Versorgungspotenzial (VBB) angeordnet ist und dessen Steueranschluss zur Ansteuerung mit einem Steuersignal (42A) mit einem Steueranschluss (41A) gekoppelt ist.

12. Schaltungsanordnung nach einem der vorstehenden Ansprüche,
**dadurch gekennzeichnet,**
**dass** die Diagnoseeinrichtung (29A, 40A, 41A, 44A - 47A) einen zweiten Widerstand (44A) aufweist, der zwischen dem Eingangs/Ausgangsanschluss (43A) und einem Anschluss für ein negatives Versorgungspotenzial oder ein Bezugspotenzial (GND) angeordnet ist.

13. Schaltungsanordnung nach einem der vorstehenden Ansprüche,
**dadurch gekennzeichnet,**
**dass** die Diagnoseeinrichtung (29A, 40A, 41A, 44A - 47A) einen Diagnoseeingang (47A) aufweist, der mit dem Eingangs/Ausgangsanschluss (43A) verbunden ist und in den in einem Diagnosebetrieb somit ein am Eingangs/Ausgangsanschluss (43A) abgreifbares Diagnoseeingangssignal (48) einkoppelbar ist.

14. UART-basiertes Bussystem (1)
mit einem UART-basierten Eindrahtbus (4),
mit einer Vielzahl von Busteilnehmern (3A - 3D), die an den Eindrahtbus (4) angekoppelt sind, wobei ein Busteilnehmer (3A - 3D) jeweils aufweist:
- zumindest eine Transceiverschaltung (7A - 7D), die die physikalische Anbindung an den Eindrahtbus (4) gewährleistet,
- zumindest eine über den Eindrahtbus (4) anzusprechende Einrichtung (8A - 8D), die die Daten verarbeitet und die Datenkommunikation steuert, und
- zumindest eine Schnittstellenschaltung (9A - 9D), über die die Datenkommunikation über den Eindrahtbus (4) nach Maßgabe eines UART-Busprotokolls erfolgt,
wobei zumindest ein Busteilnehmer (3A) eine Schaltungsanordnung (9A, 7A) nach einem der vorstehenden Ansprüche aufweist.

15. Bussystem nach Anspruch 14,
**dadurch gekennzeichnet,**
**dass** zumindest ein Busteilnehmer (3B - 3D) eine Schnittstellenschaltung (9B - 9D) aufweist, die zumindest einen UART-Eingang (11B) und zumindest einen UART-Ausgang (10B) aufweist.

16. Bussystem nach einem der Ansprüche 14 oder 15,
**dadurch gekennzeichnet,**
**dass** zumindest eine Einrichtung (8A - 8D) als programmgesteuerte Einrichtung, insbesondere als Mikroprozessor oder als Mikrocontroller, ausgebildet ist.

17. Bussystem nach einem der Ansprüche 14 bis 16,
**dadurch gekennzeichnet,**
**dass** zumindest eine Schnittstellenschaltung (9A - 9D) als Hardwareschnittstelle ausgebildet ist.

18. Bussystem nach einem der Ansprüche 14 bis 17,
**dadurch gekennzeichnet,**
**dass** jeder Busteilnehmer (3A - 3D) eine für diesen Busteilnehmer (3A - 3D) charakteristische Adresse aufweist.

19. Verfahren, bei dem eine Schaltungsanordnung nach einem der Ansprüche 1 bis 13 bereitgestellt wird,
wobei in einem Datenrahmenformat der Datensignale jeweils ein Identifikationsfeld (34) vorgesehen ist, welches eine eindeutige Identifikation der Busteilnehmer (3A - 3D) ermöglicht.

20. Verfahren nach Anspruch 19,
**dadurch gekennzeichnet,**
**dass** das Identifikationsfeld (34) als Adressfeld (34) ausgebildet ist, welches die Quelladresse (35) und Zieladresse (36) eines gesendeten Datensignals enthält, wobei lediglich die Bits der Adressfelder (34) des ersten und des zweiten Datensignals (Y2, Y3) bitweise miteinander verglichen werden.

21. Verfahren nach einem der Ansprüche 19 oder 20,
**dadurch gekennzeichnet,**
**dass** in einem Datenrahmenformat der Datensignale (Y2, Y3) jeweils ein Datenfeld (32) für die zu übertragenden Nutzdaten vorgesehen ist, wobei der Vergleich der Adressfelder (31, 34) stattfindet, noch bevor die eigentlichen Daten in dem Datenfeld (32) übertragen werden.

22. Verfahren nach einem der Ansprüche 20 oder 21,
**dadurch gekennzeichnet,**
**dass** jeder Busteilnehmer (3A - 3D) eine für diesen Busteilnehmer (3A - 3D) charakteristische Identifikation aufweist.

23. Verfahren, bei dem eine Schaltungsanordnung nach einem der Ansprüche 1 bis 13 bereitgestellt wird,
wobei ein Diagnosebetrieb (50 - 62) vorgesehen ist, bei dem im Falle, dass kein Echosignal (Y1) auf ein gesendetes Signal (Y3) hin empfangen wird, folgende Verfahrensschritte vorgenommen werden:
- Überprüfen (52) des Potenzials des am Eingangs/Ausgangsanschluss (43A) anliegenden Diagnosesignals (48A);
- Einschalten (54) des steuerbaren Schalters (40A);
- Erneutes Überprüfen (55) des Potenzials des Diagnosesignals (48A).

24. Verfahren nach Anspruch 23,
**dadurch gekennzeichnet,**
**dass** im Falle, dass kein Echosignal (Y1) auf ein gesendetes Signal (Y3) hin empfangen wird, folgende Verfahrensschritte im Diagnosebetrieb (50 - 62) vorgenommen werden:
- Überprüfen (58), ob das empfangene Echosignal (Y1) dem gesendeten Signal (Y3) entspricht;
- Überprüfen (60) eines Antwortsignals (X4) eines über den Eindrahtbus (4) mit der Schnittstellenschaltung kommunizierenden weiteren Busteilnehmers (3B).

## Claims

1. Circuit arrangement (3A) of a bus user (3A),
with an individual input/output terminal (43A), by way of which bus users are connected to a single-wire bus of a UART-based bus system (1),
with an interface circuit (9A) not configured as a UART interface, containing
- an output-compare data output (10A), which is coupled to the input/output terminal to output a binary first data signal (Y3) to be transmitted by way of the single-wire bus,
- an input-capture data input (11A), which is coupled to the input/output terminal or the data output (10A) to pick up a binary second signal (Y2), which is derived from data signals (Y1) received by way of the single-wire bus (4) and/or echo signals (Y1) derived from the first data signal (Y2),
- an interrupt input (12A) to insert an interrupt signal (Y6),
with a comparator facility (22A) configured as a hardware circuit,
- which compares the first data signal (Y3) with the second data signal (Y2),
- which is designed to identify an access conflict of a number of bus users (3A - 3D) accessing the single-wire bus from the comparison of the first and second data signals (Y2, Y3) and
- which outputs the interrupt signal (Y6) if an access conflict is identified,
with a diagnosis facility (29A, 40A, 41A, 44A-47A) to diagnose a short circuit and/or no-load operation of a single-wire bus line (4) of the single-wire bus (4), with the elements of the diagnosis facility (29A, 40A, 41A, 44A-47A) being coupled in each instance by way of an input/output terminal (43A) to the single-wire bus (4).

2. Circuit arrangement according to claim 1,
**characterised in that**
the comparator facility (22A) has an XOR gate (23A), which compares the first and second binary data signals (Y2, Y3) with each other bit by bit.

3. Circuit arrangement according to claim 2,
**characterised in that**
the comparator facility (22A) has a low-pass filter (24A) connected downstream of the XOR gate (23A), which sets a delay based on different signal propagation times of the first and second data signals (Y2, Y3).

4. Circuit arrangement according to one of the preceding claims,
**characterised in that**
the interface circuit has an interrupt facility, which has an interrupt input (12A) for insertion of the interrupt signal (Y6) and which interrupts or stops a data communication of the bus user (3A) to at least one further bus user (3B - 3D) when the interrupt signal (Y6) is present.

5. Circuit arrangement according to one of the preceding claims,
**characterised in that**
the interface circuit has a transceiver (7A) disposed between the data input (11A) and the data output (10A) on the one side and the single-wire bus (4) on the other side, the transceiver (7A) having a transmit path (14A), in which an output driver (21A) is disposed, and a receive path (13A).

6. Circuit arrangement according to claim 5,
**characterised in that**
a buffer circuit (15A) is provided in the receive path (13A) to buffer a first data signal (Y1) inserted on the input side by way of the single-wire bus (4).

7. Circuit arrangement according to one of claims 5 or 6,
**characterised in that**
a voltage transformer circuit (15A) is provided in the receive path (13A), transforming a first data signal (Y1) inserted by way of the single-wire bus (4) down from a first supply voltage (VBB-GND) to a second supply voltage (VCC-GND).

8. Circuit arrangement according to one of claims 5 to 7,
**characterised in that**
a level converter (25A) is provided in the transmit path (14A) to convert the level of the first data signal to be sent (Y3).

9. Circuit arrangement according to one of the preceding claims,
**characterised in that**
the interface circuit has at least one further data input, which is configured as a UART input, and at least one further data output, which is configured as a UART output.

10. Circuit arrangement according to one of the preceding claims,
**characterised in that**
the diagnosis facility (29A, 40A, 41A, 44A-47A) contains a first resistor (29A), which can be connected to a supply potential (VBB; GND).

11. Circuit arrangement according to one of the preceding claims,
**characterised in that**
the diagnosis facility (29A, 40A, 41A, 44A-47A) has a controllable switch (40A), the load path of which is disposed between the first resistor (29A) and the positive supply potential (VBB) and the control terminal of which is coupled to a control terminal (41A) for activation with a control signal (42A).

12. Circuit arrangement according to one of the preceding claims,
**characterised in that**
the diagnosis facility (29A, 40A, 41A, 44A-47A) has a second resistor (44A), which is disposed between the input/output terminal (43A) and a terminal for a negative supply potential or a reference potential (GND).

13. Circuit arrangement according to one of the preceding claims,
**characterised in that**
the diagnosis facility (29A, 40A, 41A, 44A-47A) has a diagnosis input (47A), which is connected to the input/output terminal (43A) and into which a diagnosis input signal (48) that can be picked off at the input/output terminal (43A) can therefore be inserted in a diagnosis mode.

14. UART-based bus system (4),
with a plurality of bus users (3A - 3D), which are connected to the single-wire bus (4), a bus user (3A - 3D) in each instance having:
- at least one transceiver circuit (7A - 7D), ensuring the physical interface with the single-wire bus (4),
- at least one facility (8A - 8D) to be addressed by way of the single-wire bus (4), which processes the data and controls the data communication, and
- at least one interface circuit (9A - 9D), by way of which data communication takes place by way of the single-wire bus (4) according to a UART bus protocol,
with at least one bus user (3A) having a circuit arrangement (9A, 7A) according to one of the preceding claims.

15. Bus system according to claim 14,
**characterised in that**
at least one bus user (3B - 3D) has an interface circuit (9B - 9D), which has at least one UART input (11B) and at least one UART output (10B).

16. Bus system according to one of claims 14 or 15,
**characterised in that**
at least one facility (8A - 8D) is configured as a programme-controlled facility, in particular as a microprocessor or microcontroller.

17. Bus system according to one of claims 14 to 16,
**characterised in that**
at least one interface circuit (9A - 9D) is configured as a hardware interface.

18. Bus system according to one of claims 14 to 17,
**characterised in that**
each bus user (3A - 3D) has an address that is characteristic of said bus user (3A - 3D).

19. Method, wherein a circuit arrangement according to one of claims 1 to 13 is provided,
with an identification field (34) being provided in each instance in a data format of the data signals, said identification field (34), allowing unique identification of the bus users (3A - 3D).

20. Method according to claim 19,
**characterised in that**
the identification field (34) is configured as an address field (34), containing the source address (35) and target address (36) of a transmitted data signal, with only the bits of the address fields (34) of the first and second data signals (Y2, Y3) being compared with each other bit by bit.

21. Method according to one of claims 19 or 20,
**characterised in that**
a data field (32) is provided in each instance in a data format of the data signals (Y2, Y3) for the payload to be transmitted, the comparison of the address fields (31, 34) taking place, even before the actual data is transmitted in the data field (32).

22. Method according to one of claims 20 or 21,
**characterised in that**
each bus user (3A - 3D) has an identification that is characteristic of said bus user (3A - 3D).

23. Method, wherein a circuit arrangement according to one of claims 1 to 13 is provided,
with a diagnosis mode (50 - 62) being provided, wherein if no echo signal (Y1) is received further to a transmitted signal (Y3), the following method steps are taken:
- checking (52) the potential of the diagnosis signal (48A) present at the input/output terminal (43A);
- activating (54) the controllable switch (40A);
- re-checking (55) the potential of the diagnosis signal (48A).

24. Method according to claim 23,
**characterised in that**
if no echo signal (Y1) is received further to a transmitted signal (Y3), the following method steps are taken in diagnosis mode (50 - 62):
- checking (58) whether the received echo signal (Y1) corresponds to the transmitted signal (Y3);
- checking (60) a response signal (X4) of a further bus user (3B) communicating by way of the single-wire bus (4) with the interface circuit.

## Revendications

1. Montage de circuit (3A) d'un périphérique (3A) connecté à un bus, comprenant :
une seule connexion d'entrée/sortie (43A), au moyen de laquelle des périphériques de bus sont raccordés à un bus monofil d'un système de bus basé UART (1),
un circuit d'interface (9A) non réalisé comme port UART, comportant
- une sortie de données de comparaison (10A), raccordée à la connexion d'entrée/sortie pour la délivrance d'un premier signal de données binaire (Y3) à adresser via le bus monofil,
- une entrée de données de saisie (11A) pour l'enregistrement d'un deuxième signal de données binaire (Y2) dérivé de signaux de données (Y1) reçus via le bus monofil (4) et/ou d'un signal d'écho (Y1) dérivé du premier signal de données (Y3), raccordée à la connexion d'entrée/sortie ou à la sortie de données (10A),
- une entrée d'interruption (12A) pour le couplage d'un signal d'interruption (Y6),
un dispositif comparateur (22A) réalisé comme montage matériel,
- comparant le premier signal de données (Y3) au deuxième signal de données (Y2),
- prévu pour détecter un conflit d'accès entre plusieurs périphériques de bus connectés au bus monofil (3A à 3D) à partir de la comparaison du premier et du deuxième signal de données (Y2, Y3), et
- émettant le signal d'interruption (Y6) en cas de conflit d'accès détecté,
un dispositif de diagnostic (29A, 40A, 41A, 44A à 47A) pour le diagnostic d'un court-circuit et/ou d'un fonctionnement à vide d'une conduite (4) du bus monofil (4), les éléments du dispositif de diagnostic (29A, 40A, 41A, 44A à 47A) étant raccordés chacun au bus monofil (4) par une connexion d'entrée/sortie (43A).

2. Montage de circuit selon la revendication 1,
**caractérisé en ce que**
le dispositif comparateur (22A) comporte une porte XOR (23A) comparant entre eux bit par bit le premier et le deuxième signal de données binaire (Y2, Y3).

3. Montage de circuit selon la revendication 2,
**caractérisé en ce que**
le dispositif comparateur (22A) comporte un filtre passe-bas (24A) en aval de la porte XOR (23A), lequel règle une temporisation sur la base des différents temps de propagation de signal pour le premier et le deuxième signal de données binaire (Y2, Y3).

4. Montage de circuit selon l'une des revendications précédentes,
**caractérisé en ce que**
le circuit d'interface comporte un circuit d'interruption avec une entrée d'interruption (12A) pour le couplage du signal d'interruption (Y6), et qui, en cas de présence du signal d'interruption (Y6), interrompt ou arrête une communication de données du périphérique de bus (3A) vers au moins un autre périphérique de bus (3B à 3D).

5. Montage de circuit selon l'une des revendications précédentes,
**caractérisé en ce que**
le circuit d'interface comporte un émetteur-récepteur (7A) disposé entre l'entrée de données (11A) et la sortie de données (10A), d'une part, et le bus monofil (4), d'autre part, ledit émetteur-récepteur (7A) comportant une voie d'émission (14A) où est disposé un excitateur de sortie (21A), et une voie de réception (13A).

6. Montage de circuit selon la revendication 5,
**caractérisé en ce qu'**
un circuit-tampon (15A) est prévu sur la voie de réception (13A) pour la mise en mémoire tampon d'un premier signal de données (Y1) couplé par le bus monofil (4) côté entrée.

7. Montage de circuit selon l'une des revendications 5 ou 6,
**caractérisé en ce qu'**
un circuit de transformateur de courant (15A) est prévu sur la voie de réception (13A), lequel transforme une première tension d'alimentation (VBB-GND) d'un premier signal de données (Y1) couplé par le bus monofil (4) en une deuxième tension d'alimentation (VCC-GND) inférieure.

8. Montage de circuit selon l'une des revendications 5 à 7,
**caractérisé en ce qu'**
un transformateur de niveau (25A) pour la conversion du niveau du premier signal de données (Y3) à adresser est prévu sur la voie d'émission (14A).

9. Montage de circuit selon l'une des revendications précédentes,
**caractérisé en ce que**
le circuit d'interface comporte au moins une autre entrée de données, réalisée comme entrée UART, et au moins une autre sortie de données, réalisée comme sortie UART.

10. Montage de circuit selon l'une des revendications précédentes,
**caractérisé en ce que**
le dispositif de diagnostic (29A, 40A, 41A, 44A à 47A) comprend une première résistance (29A) raccordable à un potentiel d'alimentation (VBB, GND).

11. Montage de circuit selon l'une des revendications précédentes,
**caractérisé en ce que**
le dispositif de diagnostic (29A, 40A, 41A, 44A à 47A) comporte un commutateur commandable (40A) dont la voie de charge est disposée entre la première résistance (29A) et le potentiel d'alimentation positif (VBB), et dont la connexion de commande est reliée à une connexion de commande (41A) pour la commande par un signal de commande (42A).

12. Montage de circuit selon l'une des revendications précédentes,
**caractérisé en ce que**
le dispositif de diagnostic (29A, 40A, 41A, 44A à 47A) comporte une deuxième résistance (44A), disposée entre la connexion d'entrée/sortie (43A) et une connexion pour un potentiel d'alimentation négatif ou un potentiel de référence (GND).

13. Montage de circuit selon l'une des revendications précédentes,
**caractérisé en ce que**
le dispositif de diagnostic (29A, 40A, 41A, 44A à 47A) comporte une entrée de diagnostic (47A) reliée à la connexion d'entrée/sortie (43A) et à laquelle un signal d'entrée de diagnostic (48) captable sur la connexion d'entrée/sortie (43A) peut donc être couplé pendant un mode de service de diagnostic.

14. Système de bus basé UART (1),
comprenant :
un bus monofil basé UART (4),
une pluralité de périphériques de bus (3A à 3D) raccordés au bus monofil (4), chaque périphérique de bus (3A à 3D) comportant :
- au moins un circuit émetteur-récepteur (7A à 7D) assurant la connexion physique au bus monofil (4),
- au moins un dispositif (8A à 8D) activable par le bus monofil (4), traitant les données et commandant la communication de données, et
- au moins un circuit d'interface (9A à 9D), assurant la communication de données par le bus monofil (4) conformément à un protocole de bus UART,
où au moins un périphérique de bus (3A) comporte un montage de circuit (9A, 7A) selon l'une des revendications précédentes.

15. Système de bus selon la revendication 14,
**caractérisé en ce qu'**
au moins un périphérique de bus (3B à 3D) comporte un circuit d'interface (9B à 9D) comprenant au moins une entrée UART (11B) et au moins une sortie UART (10B).

16. Système de bus selon l'une des revendications 14
ou 15,
**caractérisé en ce qu'**
au moins un dispositif (8A à 8D) est réalisé comme dispositif commandé par un programme enregistré, en particulier comme microprocesseur ou comme microcontrôleur.

17. Système de bus selon l'une des revendications 14 à 16,
**caractérisé en ce qu'**
au moins un circuit d'interface (9A à 9D) est réalisé comme port matériel.

18. Système de bus selon l'une des revendications 14 à 17,
**caractérisé en ce que**
chaque périphérique de bus (3A à 3D) comporte une adresse caractéristique pour ledit périphérique de bus (3A à 3D).

19. Procédé de réalisation d'un montage de circuit selon l'une des revendications 1 à 13,
où un champ d'identification (34) est prévu dans chaque format de trame de données des signaux de données, permettant une identification claire des périphériques de bus (3A à 3D).

20. Procédé selon la revendication 19,
**caractérisé en ce que**
le champ d'identification (34) est réalisé comme un champ d'adresse (34) comprenant l'adresse-source (35) et l'adresse-cible (36) d'un signal de données adressé, les bits des seuls champs d'adresse (34) du premier et du deuxième signal de données (Y2, Y3) étant comparés bit par bit entre eux.

21. Procédé selon l'une des revendications 19 ou 20,
**caractérisé en ce qu'**
un champ de données (32) est prévu dans chaque format de trame de données des signaux de données (Y2, Y3) pour les données utiles à transmettre, la comparaison des champs d'adresse (31, 34) étant effectuée avant que les données proprement dites soient transmises vers le champ de données (32).

22. Procédé selon l'une des revendications 20 ou 21,
**caractérisé en ce que**
chaque périphérique de bus (3A à 3D) présente une identification caractéristique pour ledit périphérique de bus (3A à 3D).

23. Procédé de réalisation d'un montage de circuit selon l'une des revendications 1 à 13,
où un mode de service de diagnostic (50 à 62) est prévu, où les étapes de procédé suivantes sont appliquées au cas où aucun signal d'écho (Y1) ne serait reçu suite à un signal adressé (Y3) :
- contrôle (52) du potentiel du signal de diagnostic (48A) appliqué sur la connexion d'entrée/sortie (43A) ;
- mise sous tension (54) du commutateur commandable (40A) ;
- nouveau contrôle (55) du potentiel du signal de diagnostic (48A).

24. Procédé selon la revendication 23,
**caractérisé en ce que**
les étapes de procédé suivantes sont appliquées en mode de service de diagnostic (50 à 62) au cas où aucun signal d'écho (Y1) n'est reçu suite à un signal adressé (Y3) :
- contrôle (58) si le signal d'écho reçu (Y1) correspond au signal adressé (Y3) ;
- contrôle (60) d'un signal de réponse (X4) d'un autre périphérique de bus (3B) communiquant avec le circuit d'interface via le bus monofil (4).
